# EUROPEAN PATENT APPLICATION

(11) **EP 4 654 634 A1**
(43) Date of publication of application: **26.11.2025**
(21) Application number: 24177245.8
(22) Date of filing: 22.05.2024
(51) Int. Cl.: H04W 8/12, H04W 4/021, H04W 4/30, H04W 24/02, H04W 60/04

(54) **METHOD FOR USING A USER EQUIPMENT ROAMING IN A VISITED NETWORK AND IN A GEOGRAPHICAL AREA COMPRISING AT LEAST ONE NO-TRANSMISSION ZONE, USER EQUIPMENT, SYSTEM OR MOBILE COMMUNICATION NETWORK, PROGRAM AND COMPUTER-READABLE MEDIUM**

(71) Applicant: Deutsche Telekom AG, 53113 Bonn (DE)
(72) Inventor: COLOM IKUNO, Josep, 2100 Korneuburg (AT)
(74) Representative: Schwöbel, Thilo K.

(57) **Abstract**

The invention relates to a method for using a user equipment roaming in a visited network and in a geographical area comprising at least one no-transmission zone, wherein the user equipment is associated with a home network, wherein the visited network comprises or is associated or assigned to a user equipment service supplier,
wherein,
-- upon the user equipment entering or being about to enter a considered no-transmission zone, the user equipment is triggered to modify its mode of operation to a no-transmission zone-triggered mode in accordance with being located within the considered no-transmission zone, and
-- upon the user equipment leaving or being about to leave the considered no-transmission zone, the user equipment is triggered to modify its mode of operation to a no-transmission zone-released mode in accordance with being located outside the considered no-transmission zone,
wherein, in order to use the user equipment while roaming in the visited network and in view of the considered no-transmission zone, the method comprises the following steps:
-- in a first step, the visited network transmits a no-transmission zone trigger indication, to the home network, upon being triggered to modify its mode of operation to the no-transmission zone-triggered mode and/or the visited network transmits a no-transmission zone release indication, to the home network, upon being triggered to modify its mode of operation to the no-transmission zone-released mode,
-- in a second step, the home network adapts a no-transmission zone status, related to the user equipment, in response to the no-transmission zone trigger indication and/or the no-transmission zone release indication.

## Description

### BACKGROUND

The present invention relates to a method for using a user equipment roaming in a visited network and in a geographical area comprising at least one no-transmission zone, wherein the user equipment is associated with a home network, wherein the visited network comprises or is associated or assigned to an uncrewed aerial system service supplier.

Furthermore, the present invention relates to a user equipment for being used while roaming in a visited network and in a geographical area comprising at least one no-transmission zone, wherein the user equipment is associated with a home network, wherein the visited network comprises or is associated or assigned to an uncrewed aerial system service supplier.

Additionally, the present invention relates to a system or to a mobile communication networks for using a user equipment roaming in the mobile communication network as a visited network and in a geographical area comprising at least one no-transmission zone, wherein the user equipment is associated with a home network, wherein the visited network comprises or is associated or assigned to an uncrewed aerial system service supplier.

Furthermore, the present invention relates to a program and to a computer-readable medium for using a user equipment roaming in a visited network and in a geographical area comprising at least one no-transmission zone according to the inventive method.

In conventionally known mobile communication network, it is known to use uncrewed aerial systems (or, unmanned aerial systems) - in the context of the present invention used synonymously with the term uncrewed aerial vehicles - such as, e.g., drones. Uncrewed aerial vehicles (UAVs), i.e. drones, require specific functionality, and 5G systems are able to provide specific support for these types of devices. One very important issue is that of compliance to local regulation, and an important regulation is that of no-transmission zones (NTZs). Transmission using certain frequencies at certain locations are protected and/or not allowed to be used according to local regulation. Furthermore, NTZs can be additionally and/or complementary restricted in their applicability in terms of height and/or time validity. The reasons for these limitations are typically to protect radio-based equipment from interference, such as radars (e.g. military, civil, weather) or radioastronomy telescopes. When entering such no-transmission zone or no-transmission areas (hereinafter also called no-transmit zones), a drone, or uncrewed aerial vehicle (or uncrewed aerial system), must comply with local regulations; after it leaves the no-transmit zone, it can then again normally transmit on the frequencies that were restricted in the no-transmission zone.

The present invention provides enhancements to the 5G system to better support no-transmit zones in multi-operator scenarios (e.g. roaming).

### SUMMARY

An object of the present invention is to provide a technically simple, effective and cost-effective solution for using a user equipment, especially an uncrewed aerial system, roaming in a visited network and in a geographical area comprising at least one no-transmission zone. A further object of the present invention is to provide a corresponding user equipment, especially an uncrewed aerial system, a corresponding system or mobile communication network, and a corresponding program and computer-readable medium.

The object of the present invention is achieved by a method for using a user equipment roaming in a visited network and in a geographical area comprising at least one no-transmission zone, wherein the user equipment is associated with a home network, wherein the visited network comprises or is associated or assigned to an uncrewed aerial system service supplier, wherein,
-- upon the user equipment entering or being about to enter a considered no-transmission zone, the user equipment is triggered to modify its mode of operation to a no-transmission zone-triggered mode in accordance with being located within the considered no-transmission zone, and
-- upon the user equipment leaving or being about to leave the considered no-transmission zone, the user equipment is triggered to modify its mode of operation to a no-transmission zone-released mode in accordance with being located outside the considered no-transmission zone,
wherein, in order to use the user equipment while roaming in the visited network and in view of the considered no-transmission zone, the method comprises the following steps:
-- in a first step, the visited network transmits a no-transmission zone trigger indication, to the home network, upon being triggered to modify its mode of operation to the no-transmission zone-triggered mode and/or the visited network transmits a no-transmission zone release indication, to the home network, upon being triggered to modify its mode of operation to the no-transmission zone-released mode,
-- in a second step, the home network adapts a no-transmission zone status, related to the user equipment, in response to the no-transmission zone trigger indication and/or the no-transmission zone release indication.

According to the present invention, it is advantageously possible that no-transmission zone enforcement is able to be realized even though the user equipment is roaming in a visited network and that the home network is informed of no-transmission zone enforcement. It is especially advantageous that this can be realized by means of a comparatively simple solution and with a minimum of radio access network impact. It is also especially advantageous that this can be realized while keeping the uncrewed aerial system service supplier (USS) assigned, connected, comprised within and/or associated to the visited network, whereas some or all of the user equipment subscription information is associated with the home network.

According to the present invention, the user equipment is used while the user equipment is roaming in a visited network and in a geographical area comprising at least one no-transmission zone. The user equipment is associated with a home network, wherein the visited network comprises or is associated or assigned to an uncrewed aerial system service supplier. The no-transmission zone requires that, upon the user equipment entering or being about to enter a considered no-transmission zone, the user equipment is triggered to modify its mode of operation to a no-transmission zone-triggered mode (i.e. in accordance with being located within the considered no-transmission zone), and, upon the user equipment leaving or being about to leave the considered no-transmission zone, the user equipment is triggered to modify its mode of operation to a no-transmission zone-released mode (i.e. in accordance with being located outside the considered no-transmission zone). In order to use the user equipment while roaming in the visited network and in view of the considered no-transmission zone, the method comprises the following steps:
-- in a first step, the visited network transmits a no-transmission zone trigger indication, to the home network, upon being triggered to modify its mode of operation to the no-transmission zone-triggered mode and/or the visited network transmits a no-transmission zone release indication, to the home network, upon being triggered to modify its mode of operation to the no-transmission zone-released mode,
-- in a second step, the home network adapts a no-transmission zone status, related to the user equipment, in response to the no-transmission zone trigger indication and/or the no-transmission zone release indication.

In the context of the present invention, it is stressed that uncrewed aerial vehicles and/or uncrewed aerial systems are able to be used in certain embodiments, and especially relating to uncrewed aerial vehicle communications in cellular networks. However, the disclosed solutions can be applied to any scenario in which a flying communication device wants to communicate with a control node or access point etc. Hence, as used herein, the term user equipment (or UE) is used, in some particular embodiments, to specifically refer to an aerial user equipment (or AUE) (e.g., a user equipment which is integrated in or attached to a uncrewed aerial vehicle or to other flying vehicles such as flying taxi/bus, helicopter, chopper, airplane, drone, flying balloon, glider, etc.). In general, aerial user equipments refer to any type of user equipment equipped or housed or located in any type of flying object. The flying object moves or flies in air or in free space. The term flying object may be interchangeably called a flying vehicle, aerial vehicle, aerial object, aerial device, IAB node, etc. However, though the terms user equipment (or aerial user equipment) are used interchangeably herein, it is recognized that the solutions and techniques used herein may be applicable to user equipments other than aerial user equipments.

Furthermore, the terms home network or visited network are used in the context of the present invention to primarily refer to HPLMN, or home public land mobile network, and VPLMN, or visited public land mobile network, of the respective user equipment. However, the term "PLMN" is not being only restricted to a public network, but it should also cover standalone non-public networks SNPNs; hence the terms home network and visited network are used as synonyms to HPLMN or VPLMN in order to indicate that the visited network typically corresponds to the serving network while the home network primarily corresponds to the credential owner. We consider roaming as corresponding to a user equipment using subscription credentials from one network while being served by another network. A typical use case considers two public land mobile networks (PLMNs); a visited PLMN (V-PLMN) and a home PLMN (H-PLMN), each identified by a different PLMN identifier (PLMN ID), whereas the user equipment registers in the V-PLMN using the H-PLMN's credentials and authorization/authentication is performed fully or partially performed against subscription information stored in the H-PLMN.

According to the present invention, it is furthermore advantageously possible and preferred that the user equipment is associated with the home network by means of the user equipment having, or being related to a subscription to the home network and/or wherein the user equipment is authenticated and/or authorized with the uncrewed aerial system service supplier comprised or associated with the visited network.

It is thereby advantageously possible to realize and implement the inventive method in a comparatively simple and efficient manner

Furthermore, it is advantageously possible and preferred according to the present invention that the no-transmission zone trigger indication, transmitted by the visited network to the home network, results from the visited network receiving an initial no-transmission zone trigger indication from the uncrewed aerial system service supplier, wherein the initial no-transmission zone trigger indication results from no-transmission zone information being configured within the uncrewed aerial system service supplier or from the uncrewed aerial system service supplier (USS) receiving the initial no-transmission zoneindication.

It is thereby advantageously possible to realize and implement the inventive method in a comparatively simple and efficient manner.

According to the present invention, it is furthermore advantageously possible and preferred that the no-transmission zone trigger indication, transmitted by the visited network to the home network, results from the visited network receiving an initial no-transmission zone trigger indication from the user equipment, wherein the initial no-transmission zone trigger indication results from no-transmission zone information configured within the user equipment.

It is thereby advantageously possible to realize and implement the inventive method in a comparatively simple and efficient manner.

Furthermore, it is advantageously possible and preferred according to the present invention that the no-transmission zone information and/or the no-transmission zone trigger indication and/or the initial no-transmission zone trigger indication comprises at least one time information or indication, especially a time information or indication referring to the estimated time of the user equipment entering and/or leaving the considered no-transmission zone.

It is thereby advantageously possible to efficiently realize and implement the inventive method in a comparatively simple and flexible manner.

Furthermore, it is advantageously possible and preferred according to the present invention that no-transmission zone trigger indication and/or the no-transmission zone release indication, transmitted to the home network is or corresponds to at least one out of:
-- a deregistration of the visited network's access and mobility management function, AMF, in unified data management, UDM, of the home network by the visited network's access and mobility management function, AMF, especially with reason "no-transmission zone" and/or including no-transmission zone information;
-- a notification of no-transmission zone enforcement to the policy and charging function, PCF, in the home network by the policy and charging function, PCF, in the visited network, especially including mobility restrictions reason "no-transmission zone" and/or including no-transmission zone information;
-- a notification of no-transmission zone enforcement by the session management function, SMF, in the visited network to the session management function, SMF, in the home network, especially including session termination reason "no-transmission zone" and/or including no-transmission zone information;
-- a call termination towards a multimedia system, especially an IP Multimedia Subsystem, IMS,, in the home network generated by the user equipment due to no-transmission zone enforcement and forwarded by the visited network including reason "no-transmission zone" and/or including no-transmission zone information;
-- a charging record including reason "no-transmission zone" and/or including no-transmission zone information.

It is thereby advantageously possible to realize and implement the inventive method in a comparatively simple and efficient manner.

Furthermore, it is advantageously possible and preferred according to the present invention that the second step involves the home network forwarding of no-transmission zone information from the home network to an application function (AF) connected to the home network.

It is thereby advantageously possible to realize and implement the inventive method in a comparatively simple and efficient manner.

Furthermore, the present invention relates to a user equipment, especially an uncrewed aerial system, for being used while roaming in a visited network and in a geographical area comprising at least one no-transmission zone, wherein the user equipment is associated with a home network, wherein the visited network comprises or is associated or assigned to an uncrewed aerial system service supplier, wherein,
-- upon the user equipment entering or being about to enter a considered no-transmission zone, the user equipment is triggered to modify its mode of operation to a no-transmission zone-triggered mode in accordance with being located within the considered no-transmission zone, and
-- upon the user equipment leaving or being about to leave the considered no-transmission zone, the user equipment is triggered to modify its mode of operation to a no-transmission zone-released mode in accordance with being located outside the considered no-transmission zone,
wherein, in order to use the user equipment while roaming in the visited network and in view of the considered no-transmission zone, the user equipment is configured such that:
-- the visited network transmits a no-transmission zone trigger indication, to the home network, upon being triggered to modify its mode of operation to the no-transmission zone-triggered mode and/or the visited network transmits a no-transmission zone release indication, to the home network, upon being triggered to modify its mode of operation to the no-transmission zone-released mode,
-- the home network adapts a no-transmission zone status, related to the user equipment, in response to the no-transmission zone trigger indication and/or the no-transmission zone release indication.

Furthermore, the present invention relates to a system or to a mobile communication network for using a user equipment roaming in the mobile communication network as a visited network and in a geographical area comprising at least one no-transmission zone, wherein the user equipment is associated with a home network, wherein the visited network comprises or is associated or assigned to an uncrewed aerial system service supplier, wherein,
-- upon the user equipment entering or being about to enter a considered no-transmission zone, the user equipment is triggered to modify its mode of operation to a no-transmission zone-triggered mode in accordance with being located within the considered no-transmission zone, and
-- upon the user equipment leaving or being about to leave the considered no-transmission zone, the user equipment is triggered to modify its mode of operation to a no-transmission zone-released mode in accordance with being located outside the considered no-transmission zone,
wherein, in order to use the user equipment while roaming in the visited network and in view of the considered no-transmission zone, the system or mobile communication network is configured such that:
-- the visited network transmits a no-transmission zone trigger indication, to the home network, upon being triggered to modify its mode of operation to the no-transmission zone-triggered mode and/or the visited network transmits a no-transmission zone release indication, to the home network, upon being triggered to modify its mode of operation to the no-transmission zone-released mode,
-- the home network adapts a no-transmission zone status, related to the user equipment, in response to the no-transmission zone trigger indication and/or the no-transmission zone release indication.

Additionally, the present invention relates to a program comprising a computer readable program code which, when executed on a computer and/or on a user equipment and/or on a network node of a visited network and/or on a network node of a home network and/or on an uncrewed aerial system service supplier, or in part on the user equipment and/or in part on the network node of the visited network and/or in part on the network node of the home network and/or in part on the uncrewed aerial system service supplier, causes the computer and/or the user equipment and/or the network node of the visited network and/or the network node of the home network and/or the uncrewed aerial system service supplier to perform the inventive method.

Additionally, the present invention relates to a computer-readable medium comprising instructions which when executed on a computer and/or on a user equipment and/or on a network node of a visited network and/or on a network node of a home network and/or on an uncrewed aerial system service supplier, or in part on the user equipment and/or in part on the network node of the visited network and/or in part on the network node of the home network and/or in part on the uncrewed aerial system service supplier, causes the computer and/or the user equipment and/or the network node of the visited network and/or the network node of the home network and/or the uncrewed aerial system service supplier to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

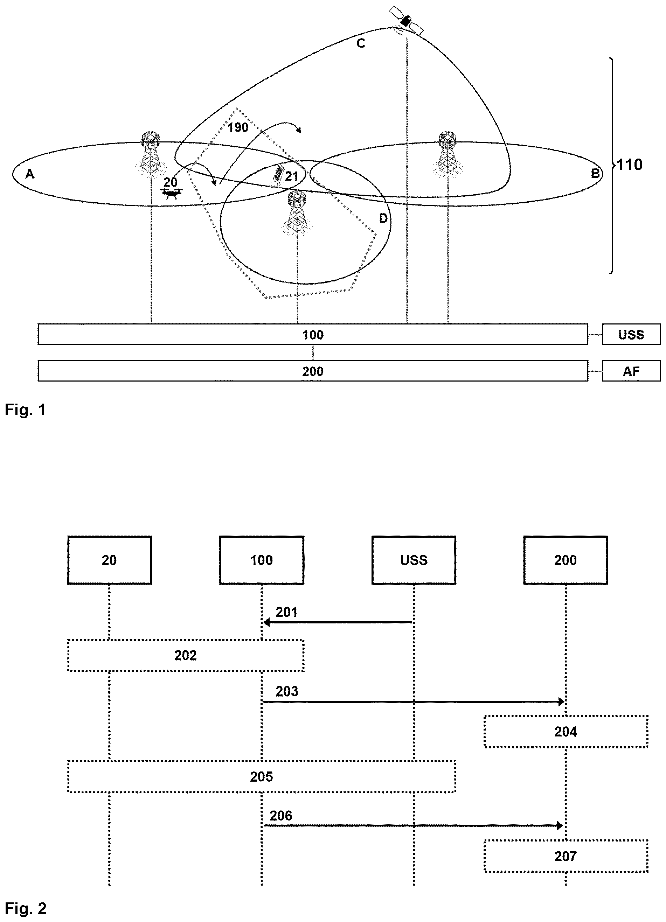

Figure 1 schematically and exemplarily illustrates an exemplary situation of a user equipment - especially an uncrewed aerial system - roaming in a visited network and in a geographical area comprising at least one no-transmission zone which no-transmission zone is overlapping with radio cell boundaries; the no-transmission zone requires the user equipment to behave accordingly, i.e. it needs to be triggered to modify its mode of operation to a no-transmission zone-triggered mode when entering (or, prior to or after having entered) the no-transmission zone, as well, it needs to be triggered to modify its mode of operation to a no-transmission zone-released mode when leaving (or, prior to or after having left) the no-transmission zone.
Figure 2 schematically and exemplarily illustrates a representation of an exemplary implementation of the user equipment - especially the uncrewed aerial system - being triggered to modify its mode of operation in a network-triggered manner.
Figure 3 schematically and exemplarily illustrates a representation of an exemplary implementation of the user equipment - especially the uncrewed aerial system - being triggered to modify its mode of operation in a user equipment-triggered manner.
Figure 4 schematically and exemplarily illustrates a representation of an exemplary implementation of the user equipment - especially the uncrewed aerial system - being triggered to modify its mode of operation in a plan-triggered manner.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100, comprising an access network 110 and a core network is schematically represented. Figure 1 schematically and exemplarily illustrates the situation of a user equipment 20 - especially an uncrewed aerial system - roaming in the mobile communication network 100 as a visited network 100 (especially, but not necessarily, a VPLMN, i.e. a visited public land mobile network), the visited network 100 typically being a cellular mobile communication network, i.e. comprising a plurality of radio cells covering, or providing coverage, a specific geographical area, respectively.

The visited network 100 covers (i.e. provides radio coverage), using its access network or radio access network 110, a geographical area (e.g. a country or a region or part of or within a country), and this geographical area comprises at least one no-transmission zone - represented, in Figure 1, by means of reference sign 190 and by means of a dotted line - which no-transmission zone 190 is exemplarily shown as overlapping with radio cell boundaries or radio cells of the visited network 100. Exemplarily, four different radio cells of the visited network's 100 radio access network 110 are schematically shown in Figure 1, namely a first radio cell (designated by reference sign A), a second radio cell (designated by reference sign B), a third radio cell (designated by reference sign C), and a fourth radio cell (designated by reference sign D). Of these exemplarily shown radio cells, the first, second and fourth radio cells A, B, D are schematically shown to be terrestrial radio cells, whereas the third radio cell C is schematically shown to be a non-terrestrial radio cell (being service by, or, at least, using) non-terrestrial network infrastructure such as a satellite and/or a high-altitude platform or high-altitude system. Hence, in the exemplary embodiment of the present invention shown in Figure 1, the visited network 100 is shown to be both a terrestrial network and a non-terrestrial network (or, the visited network 100 is shown to be a mobile communication network having a terrestrial part and a non-terrestrial part). However, according to the present invention (however not represented in Figure 1), the visited network 100 might, alternatively, also be realized as a (purely) terrestrial network, i.e. solely involving, or comprising, a terrestrial radio access network, or, alternatively, as a (purely) non-terrestrial network, i.e. solely involving, or comprising, a non-terrestrial radio access network.

The no-transmission zone 190 requires the user equipment 20 to behave according to specific requirements, especially restrictions regarding allowed (typically radio frequency) transmissions, at least regarding certain frequencies or frequency bands and/or regarding certain transmission exceeding certain transmission power (or radio signal strength) levels. Thus, upon the user equipment 20 entering the no-transmission zone 190 and upon the user equipment 20 leaving the no-transmission zone 190 it needs to be triggered to modify its mode of operation: i.e. to a no-transmission zone-triggered mode when entering (or, prior to or after having entered) the no-transmission zone 190 and to a no-transmission zone-released mode when leaving (or, prior to or after having left) the no-transmission zone 190. Both such entering the no-transmission zone 190 and such leaving the no-transmission zone 190 is schematically represented, in Figure 1, by means of an arrow, respectively.

According to the present invention, the visited network 100 that the considered user equipment 20 is using (while roaming in the visited network 100) comprises an uncrewed aerial system service supplier USS. Alternatively, the uncrewed aerial system service supplier USS might not, strictly speaking, be part of the visited network 100 but it might be associated or assigned to the visited network 100.

Furthermore according to the present invention, the user equipment 20 is associated with a home network 200: Typically, the user equipment 20 has or comprises (or has loaded) a subscription - typically using, or involving, a subscriber identity module or a universal integrated circuit card; either as a physical subscriber identity module or universal integrated circuit card, or in the form of an embedded subscriber identity module or embedded universal integrated circuit card - of, or related to, the home network 200 (typically a HPLMN) of the user equipment 20.

As already said, upon the user equipment 20 entering (or being about to enter or shortly prior to entering or after having entered) the (considered) no-transmission zone 190, the user equipment 20 needs to be triggered to modify its mode of operation to a no-transmission zone-triggered mode (in accordance with the requirements (especially legal requirements) of transmission devices being located within this considered no-transmission zone 190 - the specifics of the respective no-transmission zone-triggered mode (of the respective, i.e. the considered, no-transmission zone 190) might differ, i.e. being specific to the considered no-transmission zone 190), and, furthermore, upon the user equipment 20 leaving (or being about to leave or shortly prior to leaving or after having left) the (considered) no-transmission zone 190, the user equipment 20 needs to be triggered to modify its mode of operation to a no-transmission zone-released mode (allowed for transmission devices being located outside the considered no-transmission zone 190).

According to a specific embodiment according to the present invention, the no-transmission zones might also be nested, or superposed: i.e. a first no-transmission zone might define a larger geographical area and a second no-transmission zone might define a smaller geographical area wherein the smaller geographical area is completely, or almost completely surrounded by the first (larger) geographical area (i.e. the second geographical area is more or less a proper subset (regarding their respective geographic areas) of the first geographical area). In such a scenario (not shown in Figure 1), the (legal) no-transmission requirements imposed on transmission devices being located within the second geographical area might be more severe, or more restricted, compared to the (legal) no-transmission requirements imposed on transmission devices being located within the first geographical area. Hence, upon entering the first geographical area, the user equipment 20 is required to apply (i.e. it needs to be triggered to modify its mode of operation to) a first no-transmission zone-triggered mode (in accordance with the requirements of the first geographical area) and upon entering the second geographical area, the user equipment 20 is required to apply (i.e. it needs to be triggered to modify its mode of operation to) a second no-transmission zone-triggered mode (in accordance with the requirements of the second geographical area). Correspondingly, upon leaving the second geographical area, the user equipment 20 is triggered to modify its mode of operation to a second no-transmission zone-released mode (relative to the - more strict or more limited - second geographical area), such second no-transmission zone-released mode (relative to the second geographical area), however, still corresponding to the first no-transmission zone-triggered mode (in accordance with the requirements of the first geographical area), and only after the user equipment 20 also leaving the (larger) first geographical area, the user equipment 20 is triggered to modify its mode of operation to a first no-transmission zone-released mode (relative to the - less limited - first geographical area), such first no-transmission zone-released mode (relative to the first geographical area) might correspond to the user equipment 20 not applying any (no-transmission zone specific) transmission-related restrictions at all.

As it is the case in conventionally known mobile communication networks, typically the visited network 100 comprises, besides the radio access network 110, a core network (not specifically represented in Figure 1), which, typically, provide the user equipment 20 with connectivity towards a data network (DN - not specifically shown in Figure 1); the user equipment 20 communicates with the radio access network 110 via a radio interface (air interface), which is used for conveying both signaling information (control plane) and data traffic (user plane). Even though there is a logical separation (logical channels), at least on the air interface, i.e. typically between a base station entity (typically a gNodeB) of the radio access network 110 and the user equipment 20, both types of data are transmitted over the same physical medium. Between the radio access network 110 and the core network, signaling information and user data are separated in different interfaces: N1/N2 for signaling information, and N3 for user data. In order to establish a data connection enabling the user equipment 20 to communicate with a data network, a packet data unit (PDU) session is required; a packet data unit session being a logical data transport channel terminated at the core network that provides connectivity to the data network.

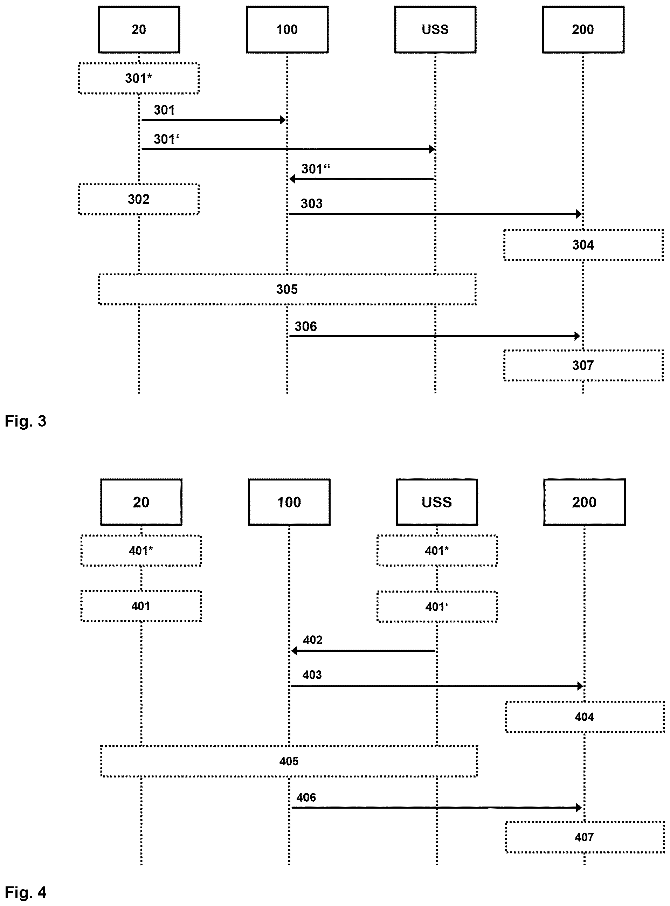

Furthermore, in conventionally known mobile communication networks, in order to better support the operation of uncrewed aerial systems (UAS), 3GPP standardized specific architecture and functional enhancements for uncrewed aerial systems (hereinafter also called uncrewed aerial vehicles and/or abbreviated UAS or UAV) are known as part of 5G; the following functionality is supported as of Release 18:
-- Authentication and authorization of a uncrewed aerial vehicle with the uncrewed aerial system service supplier during 5GS registration;
-- Authentication and authorization of a uncrewed aerial vehicle with the uncrewed aerial system service supplier during PDU session establishment and packet data network connection establishment;
-- Support for USS authorization of command and control (C2) communication;
-- A reference model for UAV tracking, supporting three UAV tracking modes: UAV location reporting mode, UAV presence monitoring mode, and list of Aerial UEs in a geographic area. The 3GPP system supports geofencing (for in-flight UAV) and geocaging (for UAV on the ground intending to fly) functionality in USS by providing enablers such as location services, event notification to a subscribing USS, etc.;
-- Support for Broadcast Remote ID using MBS;
-- Support for Direct C2 Communication;
-- Support for Detect and Avoid mechanisms based on PC5 reference point (direct communications interface between user equipments);
-- Support for Broadcast Remote ID using PC5 reference point;
TS 23.256 defines support for UAV-specific functionality, such as detect and avoid and broadcast of a (UAV) Remote ID.
For the roaming architecture, and regardless of the data plane used (local breakout or home routed), the UAS network function or service (UAS NF) is located in the visited network (typically a VPLMN) 100, cf. Figure 4.2.4-2 of TS 23.256. It is specific of the UAS architecture that the UAS NF, which interfaces to the uncrewed aerial system service supplier, is located in the visited network (typically VPLMN) 100, while typically application functions (AFs) interface with the home network (typically HPLMN) 200, i.e. the owner of the subscription.
Especially, the UAS NF (uncrewed aerial system network function or service) is defined as being supported by the network exposure function, NEF, or by a combination of a service capability exposure function and network exposure function (SCEF+NEF) and used for external exposure of services to the uncrewed aerial system service supplier. Typically, the UAS-NF makes use of existing NEF/SCEF exposure services for UAV authentication/authorization, for UAV flight authorization, for UAV-UAVC pairing authorization, and related re-authentication/re-authorization and revocation; for location reporting, presence monitoring, obtaining list of Aerial UEs in a geographic area and control of QoS/traffic filtering for C2 communication.
Especially, TS 23.256 (clause 4.3.3) defines an uncrewed aerial vehicle (UAV) such that it is a 3GPP user equipment supporting the user equipment functionality defined in TS 23.401 and in TS 23.501, and in addition:
-- a UAV that is configured for UAS services is provisioned with a single CAA-Level UAV ID;
-- a UAV that is configured for UAS services (i.e. is provisioned with a CAA-Level UAV ID) registers to the 3GPP system for UAS services (i.e. to take advantage of aerial features, connectivity with USS and for C2 connectivity) and provides the CAA-Level UAV ID and a UUAA Aviation Payload to 5GS or EPS. A UAV that has not performed a registration with aviation authorities shall not attempt to request for UAS services;
-- a UAV that is configured for UAS services may support the following functions:
-- reports the A2X Capability and PC5 Capability for A2X (i.e. LTE PC5 and/or NR PC5) to 5GC over N1 reference point;
-- indicates A2X Policy Provisioning Request in UE Policy Container for UE triggered A2X Policy provisioning
-- receives the A2X parameters from 5GC over N1 reference point;
-- supports procedures for A2X communication over PC5 reference point;
-- Configuration of parameters for A2X communication. These parameters can be pre-configured in the UE, or, if in coverage, provisioned or updated by signaling over the N1 reference point from the PCF in the HPLMN or over A2X1 reference point from the A2X Application Server;
-- Provided with the following for receiving Broadcast Remote ID via MBS:
-- Announcement via existing announcement mechanisms specified in TS 23.247, TS 26.502 and TS 26.517; or
-- MBS session announcement provisioned as specified in clause 6.2.1.3.1.
-- Provisioned with MBS session announcement for receiving A2X Application Server information via MBS as specified in clause 6.2.1.3.1.

Furthermore, TS 23.256 (clause 4.3.2) defines the UAS NF as follows:
-- The UAS Network Function is supported by the NEF or SCEF+NEF and used for external exposure of services to the USS. The UAS-NF makes use of existing NEF/SCEF exposure services for UAV authentication/authorization, for UAV flight authorization, for UAV-UAVC pairing authorization, and related re-authentication/re-authorization and revocation; for location reporting, presence monitoring, obtaining list of Aerial UEs in a geographic area and control of QoS/traffic filtering for C2 communication.
-- The UAS NF may coordinate with the USS to assist CAA-Level UAV ID assignment.
-- A dedicated NEF may be deployed to provide only the UAS NF functionality, i.e. to support the UAS specific features/APIs and the NEF features/APIs that are specified for capability exposure towards the USS.
-- For external exposure of services related to specific UAV(s), the UAS NF resides in the VPLMN, in order to interface with country specific USS(es).
-- When CAPIF is supported by the UAS NF, the UAS NF supports the CAPIF API provider domain functions as specified in TS 23.222.
-- To support re-authentication/re-authorization and revocation request by USS, the UAS NF stores information as to whether the re-authentication/re-authorization and revocation is towards an access and mobility management function (AMF) or session management function/session management function and packet gateway (SMF/SMF+PGW-C) and the address of the serving AMF or SMF/SMF+PGW-C.
-- UAS NF stores the result of UUAA-MM procedures and the result of UUAA-SM procedures.

Furthermore, it is conventionally known to apply geographic restrictions regarding the transmission of radiofrequency signals by user equipments. Especially for drones, but also applicable for other wireless/mobile network deployments, it is necessary to comply with local regulations. One relevant regulation that requires technical measures is the implementation of geographic transmission restrictions - also called no-transmission zone or no-trasmit zones.
Exemplarily, ECC decision 22(07)defines no-transmit zones as "a geographical area where aerial UE are not allowed to operate in a certain frequency band". Regulatory requirements can range from specifying out-of-band limits to a full prohibition of transmission in a specific frequency band for a given geographic location.
In terms of cell coverage, regulatory restrictions are defined in geographic terms and as such they will typically be fully unrelated to the coverage provided by the radio access network (RAN). Typically, it will not match the coverage of a specific cell and may overlap the coverage area of several cells, or several cells may cover the same restricted area. The same does not only apply to the geographical boundaries of radio cells but also of other 5G concepts related to geographical area such as tracking areas and/or registration areas. Hence related thereto, a tracking area (TA), identified by a Tracking Area Code (TAC - a tracking area is a geographical area served by a group of cells, and the TAC helps identify the specific tracking area to which a UE belongs; a Tracking Area identity (TAI) is used to identify tracking areas; the TAI is constructed from the PLMN identity the tracking area belongs to and the TAC (Tracking Area Code) of the Tracking Area; cf. clause 8.2 of TS 38.300), which is the radio access network granularity visible to the core network, may not match a given geographic area. Furthermore, related to tracking area (TA), a registration area (RA) comprises a group of TAs the user equipment is allocated to when registering to the 5G core network; while it may be mapped 1:1 to a TAs, it may also comprise a superset of Tas, and when a user equipment moves out of the RA, it will (need to) re-register to the core network with reason "mobility"; registration areas were introduced with 5G with the aim to reduce signaling related to TA updates.
The geographic restrictions regarding the transmission of radiofrequency signals typically do not only apply to user equipments but also to base station entities (gNBs in 5G systems), as there is, typically, an interrelation of uplink and downlink transmission:
Due to the procedures, protocols and control plane required and/or triggered when receiving data, data reception (i.e. data reception by the user equipment) also requires data transmission; examples include, e.g., hybrid HARQ usage in the Downlink Shared channel, DL-SCH (data reception by the user equipment requires the user equipment to signal HARQ (status) information back to the gNodeB, even though it is - as a L1/L2 procedure - transparent to the core network (and also to higher layers of the radio access network protocol stack)) and random access procedures (while it does not require a scheduling and hence may result in a collision, it requires a random access response (RAR), which requires bidirectionality, cf., e.g., clause 5.1.4 of TS 38.321.

Furthermore, it is conventionally known to use user equipment identifiers between the radio access network and the core network. The subscriber permanent identifier (SUPI - or IMSI, international mobile subscriber identifier, in 4G) is an identifier that is required to be kept private. As such, 5G provides means to encrypt this identifier. The SUPI is not known to the radio access network, hence an identifier mapping is required in order to signal radio access network identifiers visible to radio access network entities or network nodes at registration time (cf. TS 23.502 clause 4.2.2.1):
-- SUCI: an encrypted form of the SUPI that only the core network can decrypt with information stored in the home network (especially a HPLMN);
-- 5G-GUTI: A temporary identifier allocated by the access and mobility management function, AMF; at the time of network registration, the access and mobility management function allocates the 5G-GUTI, which is comprised of the GUAMI (Globally Unique AMF ID) and the 5G-TMSI (5G Temporary Mobile Subscriber Identity);
-- PEl: It is possible to register with a device identifier. This is only used in some countries for SIM-less registration, e.g. for emergency calling.

According to the present invention, the user equipment 20 is roaming in the visited network 100 in the vicinity of at least one (considered) no-transmission zone 190, and the visited network 100 comprises (or is associated or assigned to) the uncrewed aerial system service supplier USS. Upon the user equipment 20 entering or leaving (or being about to enter or to leave) the (considered) no-transmission zone 190, the user equipment 20 is triggered to modify its mode of operation (to the no-transmission zone-triggered mode or to the no-transmission zone-released mode, respectively). According to the present invention, the visited network 100 transmits, to the home network 200,
-- the no-transmission zone trigger indication (upon the user equipment 20 being triggered to modify its mode of operation to the no-transmission zone-triggered mode) and/or
-- the no-transmission zone release indication (upon the user equipment 20 being triggered to modify its mode of operation to the no-transmission zone-released mode). Furthermore, the home network 200 adapts a no-transmission zone status, related to the user equipment 20, in response to receiving (or the reception of) the no-transmission zone trigger indication and/or the no-transmission zone release indication, respectively. It is especially preferred according to the present invention that (when the respective situation applies) both the no-transmission zone trigger indication and the no-transmission zone release indication is transmitted (by the visited network 100 to the home network 200).
It is thereby advantageously possible, according to the present invention, that a simple solution is able to be realized - especially with a minimum of radio access network impact but allowing the home network 200 access to information related to the behavior of the roaming user equipment 20 - to the following scenario:
-- the user equipment 20 is roaming in the visited network 100 that corresponds to a 5G System using UAV architecture (e.g. UAV communicating with USS), i.e. the visited network 100 comprises or is associated or assigned to an uncrewed aerial system service supplier (USS); however, despite the roaming situation in the visited network 100 (i.e. the visited network 100 serves the user equipment 20), the subscription of the user equipment 20 lies in the home network 200 (i.e. the subscriber information is based in the home network 200), and, since the subscription is based on the home network 200 (especially HPLMN), the uncrewed aerial system service supplier USS communicates with the visited network 100 or VPLMN. The home network 200 has no visibility into the visited network's radio access network and the home network 200 is not communicating with the uncrewed aerial system service supplier,
-- the no-transmission zone (NTZ) 190 is defined in a specific (geographical) area, and
-- a considered user equipment 20 (i.e. user equipment 20) is capable of ascertaining or determining its own position and configured with NTZ information (i.e. information about where the no-transmission zone 190 is located) about to enter (or, about to leave, respectively) the no-transmission zone 190,
-- the cell coverage (at least regarding cell A but also regarding other radio cells) is not necessarily aligned with the no-transmission zone 190 (i.e. either bigger or smaller than the no-transmission zone 190).
In such a scenario, the home network 200 shall be able to be provided with up-to-date information on the status of the user equipment 20 (especially being (or being part of) an uncrewed aerial vehicle), thereby especially providing the possibility for a reestablishment of connectivity after the user equipment 20/uncrewed aerial vehicle leaves the no-transmission zone 190.

Even though, in conventionally known mobile communication networks, no-transmission zone enforcement is known per se, such conventionally known exchange of messages in view of no-transmission zone enforcement (especially between the respective radio access network and the uncrewed aerial system service supplier) lacks native roaming support, i.e. in case that the radio access network does not correspond to the one of the home network of the respective user equipment, it is not possible - at least not generally - to transmit, by this (then) visited network, the no-transmission zone trigger indication and/or the no-transmission zone release indication to the respective home network.

This is especially due to the fact that in a roaming scenario, the home network 200 has no direct connectivity towards the uncrewed aerial system service supplier (USS).

Furthermore, typically, application functions (AFs) communicate with the home network (or HPLMN). However, a particularity of the 5G UAS architecture is that the USS FN/NEF is located in the VPLMN, so as to interface with country specific USS(es). Nevertheless, in the case of roaming, the subscriber information (unified data management, UDM, and authentication server function, AUSF) is always located in the home network (or HPLMN), as well as the policy logic (policy and charging function, PCF) and session management (session management function, SMF) for the case of home routed which is typically the case when roaming.

According to the present invention, three variants are provided to support no-transmission zones (or no-transmission zone enforcement) in a roaming scenario of user equipment 20. The variants support different triggering mechanisms of the no-transmission zone (enforcement). The supported variants are: USS-triggered, UE-triggered and plan-triggered and is schematically shown in Figures 2 to 4.

Figure 2 schematically and exemplarily illustrates a representation of an exemplary implementation of the user equipment 20 - especially the uncrewed aerial system - being triggered to modify its mode of operation in a network-triggered manner. In a first processing step 201, the uncrewed aerial system service supplier USS transmits initial no-transmission zone indication to the visited network 100.
In a second processing step 202, the no-transmission zone is enforced (by the user equipment 20 and the visited network 100). This results in - in a third processing step 203 - the no-transmission zone trigger indication being sent, by the visited network 100, to the home network 200, and - in a fourth processing step 204 - the no-transmission zone status that is associated, within the home network 200 (or a network node or network function or service thereof), with the considered user equipment 20 being modified or updated.
In a fifth processing step 205, the no-transmission zone is released (by the user equipment 20 and the visited network 100). This results in - in a sixth processing step 206 - the no-transmission zone release indication being sent, by the visited network 100, to the home network 200, and - in a seventh processing step 207 - the no-transmission zone status that is associated, within the home network 200 (or a network node or network function or service thereof), with the considered user equipment 20 being modified or updated.
Hence, for such a network-triggered case (e.g. in case that the no-transmission zone enforcement is triggered by the network, e.g. the uncrewed aerial system service supplier USS), there is explicit signaling - in the first processing step 201 - from the USS (e.g. via the NEF or UAS NF) such that the user equipment 20 enforces the no-transmission zone: The USS triggers an (initial) NTZ indication towards the VPLMN 100, e.g. either via a NEF or a UAS NF. The NTZ is enforced - in the second processing step 202 - by the UE and optionally RAN. The VPLMN 100 sends a NTZ indication to the HPLMN (third processing step 203), indicating NTZ for the (considered) UAV (i.e. user equipment 20) and/or including NTZ information. Considered messages are:
-- Deregistration of VPLMN's AMF in UDM of HPLMN by the VPLMN's AMF, especially with reason "NTZ" and/or including NTZ information
-- Notification of NTZ enforcement to the H-PCF by the V-PCF, especially including mobility restrictions reason "NTZ" and/or including NTZ information
-- Notification of NTZ enforcement by the V-SMF to the H-SMF, especially including session termination reason "NTZ" and/or including NTZ information
-- Call termination towards the voice system (e.g. IMS) in the HPLMN generated by the UE due to NTZ enforcement and forwarded by the VPLMN including reason "NTZ" and/or including NTZ information
-- A charging record including reason "NTZ" and/or including NTZ information.
As a result, the HPLMN 200 associates the NTZ status with the user equipment 20 (fourth processing step 204).
After NTZ release - in the fifth processing step 205 -, the VPLMN 100 signals - in the sixth processing step 206 - to the HPLMN 200 the NTZ release for the (considered) UAV (i.e. the user equipment 20) including NTZ information, which subsequently results in the HPLMN 200 associating - in the seventh processing step 207 - the (new) NTZ status with the user equipment 20.

Figure 3 schematically and exemplarily illustrates a representation of an exemplary implementation of the user equipment 20 - especially the uncrewed aerial system - being triggered to modify its mode of operation in a user equipment-triggered manner.
In an initial processing step 301*, no-transmission zone information is configured with the user equipment 20. According to a first variant of a first processing step 301, the user equipment 20 transmits initial no-transmission zone indication to the visited network 100. The same result (i.e. that the initial no-transmission zone indication is received by the visited network 100) is obtained according to a second variant of the first processing step, comprising both a first part of the first processing step 301' and a second part of the first processing step 301": In the first part of the first processing step 301', the user equipment 20 transmits the initial no-transmission zone indication to the uncrewed aerial system service supplier USS, and in the second part of the first processing step 301", the uncrewed aerial system service supplier USS transmits the initial no-transmission zone indication to the visited network 100.
In a second processing step 302, the no-transmission zone is enforced (by the user equipment 20). This results in - in a third processing step 303 - the no-transmission zone trigger indication being sent, by the visited network 100, to the home network 200, and - in a fourth processing step 304 - the no-transmission zone status that is associated, within the home network 200 (or a network node or network function or service thereof), with the considered user equipment 20 being modified or updated.
In a fifth processing step 305, the no-transmission zone is released (by the user equipment 20 and the visited network 100). This results in - in a sixth processing step 306 - the no-transmission zone release indication being sent, by the visited network 100, to the home network 200, and - in a seventh processing step 307 - the no-transmission zone status that is associated, within the home network 200 (or a network node or network function or service thereof), with the considered user equipment 20 being modified or updated.
Hence, for such a user equipment-triggered case, the user equipment 20 is (pre-) configured with no-transmission zone information; hence, the user equipment 20 can send - prior to entering the no-transmission zone 190 - an NTZ indication to the VPLMN 100 (first variant of the first processing step 301) and/or to the uncrewed aerial system service supplier USS, which can subsequently notify the VPLMN 100 (second variant of the first processing step, involving the first and second parts 301', 301" of the first processing step).
After which the user equipment 20 can enforce the NTZ on its side (e.g. shutting down transmission on specific frequencies) and the communication between the visited network 100 and the home network 200 occurs according to the network-triggered case.

Figure 4 schematically and exemplarily illustrates a representation of an exemplary implementation of the user equipment 20 - especially the uncrewed aerial system - being triggered to modify its mode of operation in a plan-triggered manner.
In two initial processing steps 401*, no-transmission zone information is configured with the user equipment 20 and the uncrewed aerial system service supplier USS. In two first processing steps 401, the no-transmission zone is enforced (by the user equipment 20 and/or by the uncrewed aerial system service supplier USS). In a second processing step 402, the uncrewed aerial system service supplier USS transmits initial no-transmission zone indication to the visited network 100.
This results in - in a third processing step 403 - the no-transmission zone trigger indication being sent, by the visited network 100, to the home network 200, and - in a fourth processing step 404 - the no-transmission zone status that is associated, within the home network 200 (or a network node or network function or service thereof), with the considered user equipment 20 being modified or updated.
In a fifth processing step 405, the no-transmission zone is released (by the user equipment 20 and the visited network 100). This results in - in a sixth processing step 406 - the no-transmission zone release indication being sent, by the visited network 100, to the home network 200, and - in a seventh processing step 407 - the no-transmission zone status that is associated, within the home network 200 (or a network node or network function or service thereof), with the considered user equipment 20 being modified or updated.
Hence, alternatively (to triggering by the user equipment 20 or by the network), it is possible to base the triggering logic on (pre-)configured knowledge, such that the NTZ configuration/information (the uncrewed aerial system service supplier USS may be aware of the exact location of the user equipment by other means not subject to the NTZ, such as transponder-based air traffic control systems or a known flight plan) is present - initial processing steps 401* - both in the user equipment 20 and the uncrewed aerial system service supplier USS. Hence the user equipment 20 does not need to preemptively notify the VPLMN 100; the (planned and/or observed) NTZ enforcement by the user equipment 20 is also known to the uncrewed aerial system service supplier USS. Hence, the uncrewed aerial system service supplier USS can provide an NTZ indication to the VPLMN 100 in the second processing step 402.
After which the communication between the visited network 100 and the home network 200 occurs according to the network-triggered case or user equipment-triggered case.

According to the present invention, it is advantageously possible that the home network 200 is able to use the received no-transmission zone (trigger and/or release) indication or association information. While the uncrewed aerial system service supplier USS is responsible for UAV-related functionality, the UAV is, to all effects, a user equipment with a subscription from the HPLMN 200. As such, it is necessary for the HPLMN (and often required by regulation) that:
-- the HPLMN 200 knows the reason why its subscriber or user equipment 20 (was) disconnected from the network; otherwise, the uncrewed aerial system service supplier USS could steer the user equipment 20 without knowledge of the HPLMN 200, i.e. the subscription owner;
-- similarly applies to ongoing/dropped sessions (e.g. data sessions) and/or calls (e.g. voice calls via IP multimedia subsystem, IMS)
-- so that this information can be attached to charging records (e.g. not charge a call dropped by regulatory requirements)
-- lack of information regarding disconnects due to no-transmit zones could otherwise erroneously indicate the HPLMN 200 that a given VPLMN 100 has poor performance and result in the user equipment 20 being steered away from the VPLMN 100, e.g. by means of steering of roaming (SoR) configuration
-- so that this information can be provided to an application functions AFs (or other network functions or services NFs) within the HPLMN 200, e.g. location-related and/or related to legal interception.

## Claims

1. Method for using a user equipment (20) roaming in a visited network (100) and in a geographical area comprising at least one no-transmission zone (190), wherein the user equipment (20) is associated with a home network (200), wherein the visited network (100) comprises or is associated or assigned to an uncrewed aerial system service supplier (USS), wherein,
-- upon the user equipment (20) entering or being about to enter a considered no-transmission zone (190), the user equipment (20) is triggered to modify its mode of operation to a no-transmission zone-triggered mode in accordance with being located within the considered no-transmission zone (190), and
-- upon the user equipment (20) leaving or being about to leave the considered no-transmission zone (190), the user equipment (20) is triggered to modify its mode of operation to a no-transmission zone-released mode in accordance with being located outside the considered no-transmission zone (190),
wherein, in order to use the user equipment (20) while roaming in the visited network (100) and in view of the considered no-transmission zone (190), the method comprises the following steps:
-- in a first step, the visited network (100) transmits a no-transmission zone trigger indication, to the home network (200), upon being triggered to modify its mode of operation to the no-transmission zone-triggered mode and/or the visited network (100) transmits a no-transmission zone release indication, to the home network (200), upon being triggered to modify its mode of operation to the no-transmission zone-released mode,
-- in a second step, the home network (200) adapts a no-transmission zone status, related to the user equipment (20), in response to the no-transmission zone trigger indication and/or the no-transmission zone release indication.

2. Method according to claim 1, wherein the user equipment (20) is associated with the home network (200) by means of the user equipment (20) having, or being related to a subscription to the home network (200) and/or
wherein the user equipment (20) is authenticated and/or authorized with the uncrewed aerial system service supplier (USS) comprised or associated with the visited network (100).

3. Method according to one of the preceding claims, wherein the no-transmission zone trigger indication, transmitted by the visited network (100) to the home network (200), results from the visited network (100) receiving an initial no-transmission zone trigger indication from the uncrewed aerial system service supplier (USS), wherein the initial no-transmission zone trigger indication results from no-transmission zone information being configured within the uncrewed aerial system service supplier (USS) or from the uncrewed aerial system service supplier (USS) receiving the initial no-transmission zone indication.

4. Method according to one of the preceding claims, wherein the no-transmission zone trigger indication, transmitted by the visited network (100) to the home network (200), results from the visited network (100) receiving an initial no-transmission zone trigger indication from the user equipment (20), wherein the initial no-transmission zone trigger indication results from no-transmission zone information configured within the user equipment (20).

5. Method according to one of the preceding claims, wherein the no-transmission zone information and/or the no-transmission zone trigger indication and/or the initial no-transmission zone trigger indication comprises at least one time information or indication, especially a time information or indication referring to the estimated time of the user equipment (20) entering the considered no-transmission zone (190).

6. Method according to one of the preceding claims, wherein no-transmission zone trigger indication and/or the no-transmission zone release indication, transmitted to the home network (200) is or corresponds to at least one out of:
-- a deregistration of the visited network's access and mobility management function, AMF, in unified data management, UDM, of the home network by the visited network's access and mobility management function, AMF, especially with reason "no-transmission zone" and/or including no-transmission zone information;
-- a notification of no-transmission zone enforcement to the policy and charging function, PCF, in the home network by the policy and charging function, PCF, in the visited network, especially including mobility restrictions reason "no-transmission zone" and/or including no-transmission zone information;
-- a notification of no-transmission zone enforcement by the session management function, SMF, in the visited network to the session management function, SMF, in the home network, especially including session termination reason "no-transmission zone" and/or including no-transmission zone information;
-- a call termination towards a multimedia system, especially an IP Multimedia Subsystem, IMS,, in the home network generated by the user equipment due to no-transmission zone enforcement and forwarded by the visited network including reason "no-transmission zone" and/or including no-transmission zone information;
-- a charging record including reason "no-transmission zone" and/or including no-transmission zone information.

7. Method according to one of the preceding claims, wherein the second step involves the home network (200) forwarding of no-transmission zone information from the home network (200) to an application function (AF) connected to the home network (200).

8. User equipment (20) for being used while roaming in a visited network (100) and in a geographical area comprising at least one no-transmission zone (190), wherein the user equipment (20) is associated with a home network (200), wherein the visited network (100) comprises or is associated or assigned to an uncrewed aerial system service supplier (USS),
wherein,
-- upon the user equipment (20) entering or being about to enter a considered no-transmission zone (190), the user equipment (20) is triggered to modify its mode of operation to a no-transmission zone-triggered mode in accordance with being located within the considered no-transmission zone (190), and
-- upon the user equipment (20) leaving or being about to leave the considered no-transmission zone (190), the user equipment (20) is triggered to modify its mode of operation to a no-transmission zone-released mode in accordance with being located outside the considered no-transmission zone (190),
wherein, in order to use the user equipment (20) while roaming in the visited network (100) and in view of the considered no-transmission zone (190), the user equipment (20) is configured such that:
-- the visited network (100) transmits a no-transmission zone trigger indication, to the home network (200), upon being triggered to modify its mode of operation to the no-transmission zone-triggered mode and/or the visited network (100) transmits a no-transmission zone release indication, to the home network (200), upon being triggered to modify its mode of operation to the no-transmission zone-released mode,
-- the home network (200) adapts a no-transmission zone status, related to the user equipment (20), in response to the no-transmission zone trigger indication and/or the no-transmission zone release indication.

9. System or mobile communication network (100) for using a user equipment (20) roaming in the mobile communication network as a visited network (100) and in a geographical area comprising at least one no-transmission zone (190), wherein the user equipment (20) is associated with a home network (200), wherein the visited network (100) comprises or is associated or assigned to an uncrewed aerial system service supplier (USS),
wherein,
-- upon the user equipment (20) entering or being about to enter a considered no-transmission zone (190), the user equipment (20) is triggered to modify its mode of operation to a no-transmission zone-triggered mode in accordance with being located within the considered no-transmission zone (190), and
-- upon the user equipment (20) leaving or being about to leave the considered no-transmission zone (190), the user equipment (20) is triggered to modify its mode of operation to a no-transmission zone-released mode in accordance with being located outside the considered no-transmission zone (190),
wherein, in order to use the user equipment (20) while roaming in the visited network (100) and in view of the considered no-transmission zone (190), the system or mobile communication network (100) is configured such that:
-- the visited network (100) transmits a no-transmission zone trigger indication, to the home network (200), upon being triggered to modify its mode of operation to the no-transmission zone-triggered mode and/or the visited network (100) transmits a no-transmission zone release indication, to the home network (200), upon being triggered to modify its mode of operation to the no-transmission zone-released mode,
-- the home network (200) adapts a no-transmission zone status, related to the user equipment (20), in response to the no-transmission zone trigger indication and/or the no-transmission zone release indication.

10. Program comprising a computer readable program code which, when executed on a computer and/or on a user equipment (20) and/or on a network node of a visited network (100) and/or on a network node of a home network (200) and/or on an uncrewed aerial system service supplier (USS), or in part on the user equipment (20) and/or in part on the network node of the visited network (100) and/or in part on the network node of the home network (200) and/or in part on the uncrewed aerial system service supplier (USS), causes the computer and/or the user equipment (20) and/or the network node of the visited network (100) and/or the network node of the home network (200) and/or the uncrewed aerial system service supplier (USS) to perform a method according one of claims 1 to 7.

11. Computer-readable medium comprising instructions which when executed on a computer and/or on a user equipment (20) and/or on a network node of a visited network (100) and/or on a network node of a home network (200) and/or on an uncrewed aerial system service supplier (USS), or in part on the user equipment (20) and/or in part on the network node of the visited network (100) and/or in part on the network node of the home network (200) and/or in part on the uncrewed aerial system service supplier (USS), causes the computer and/or the user equipment (20) and/or the network node of the visited network (100) and/or the network node of the home network (200) and/or the uncrewed aerial system service supplier (USS) to perform a method according to one of claims 1 to 7.

## Amended claims

### Amended claims in accordance with Rule 137(2) EPC.

1. Method for using a user equipment (20) roaming in a visited network (100) and in a geographical area comprising at least one no-transmission zone (190), wherein the user equipment (20) is associated with a home network (200), wherein the visited network (100) comprises or is associated or assigned to an uncrewed aerial system service supplier (USS),
wherein,
-- upon the user equipment (20) entering or being about to enter a considered no-transmission zone (190), the user equipment (20) is triggered to modify its mode of operation to a no-transmission zone-triggered mode in accordance with being located within the considered no-transmission zone (190), and
-- upon the user equipment (20) leaving or being about to leave the considered no-transmission zone (190), the user equipment (20) is triggered to modify its mode of operation to a no-transmission zone-released mode in accordance with being located outside the considered no-transmission zone (190),
wherein, in order to use the user equipment (20) while roaming in the visited network (100) and in view of the considered no-transmission zone (190), the method comprises the following steps:
-- in a first step, the visited network (100) transmits a no-transmission zone trigger indication, to the home network (200), upon being triggered to modify its mode of operation to the no-transmission zone-triggered mode and/or the visited network (100) transmits a no-transmission zone release indication, to the home network (200), upon being triggered to modify its mode of operation to the no-transmission zone-released mode,
-- in a second step, the home network (200) adapts a no-transmission zone status, related to the user equipment (20), in response to the no-transmission zone trigger indication and/or the no-transmission zone release indication.

2. Method according to claim 1, wherein the user equipment (20) is associated with the home network (200) by means of the user equipment (20) having, or being related to a subscription to the home network (200) and/or
wherein the user equipment (20) is authenticated and/or authorized with the uncrewed aerial system service supplier (USS) comprised or associated with the visited network (100).

3. Method according to one of the preceding claims, wherein the no-transmission zone trigger indication, transmitted by the visited network (100) to the home network (200), results from the visited network (100) receiving an initial no-transmission zone trigger indication from the uncrewed aerial system service supplier (USS), wherein the initial no-transmission zone trigger indication results from no-transmission zone information being configured within the uncrewed aerial system service supplier (USS) or from the uncrewed aerial system service supplier (USS) receiving the initial no-transmission zone indication.

4. Method according to one of the preceding claims, wherein the no-transmission zone trigger indication, transmitted by the visited network (100) to the home network (200), results from the visited network (100) receiving an initial no-transmission zone trigger indication from the user equipment (20), wherein the initial no-transmission zone trigger indication results from no-transmission zone information configured within the user equipment (20).

5. Method according to one of the preceding claims, wherein the no-transmission zone information and/or the no-transmission zone trigger indication and/or the initial no-transmission zone trigger indication comprises at least one time information or indication, especially a time information or indication referring to the estimated time of the user equipment (20) entering the considered no-transmission zone (190).

6. Method according to one of the preceding claims, wherein no-transmission zone trigger indication and/or the no-transmission zone release indication, transmitted to the home network (200) is or corresponds to at least one out of:
-- a deregistration of the visited network's access and mobility management function, AMF, in unified data management, UDM, of the home network by the visited network's access and mobility management function, AMF, especially with reason "no-transmission zone" and/or including no-transmission zone information;
-- a notification of no-transmission zone enforcement to the policy and charging function, PCF, in the home network by the policy and charging function, PCF, in the visited network, especially including mobility restrictions reason "no-transmission zone" and/or including no-transmission zone information;
-- a notification of no-transmission zone enforcement by the session management function, SMF, in the visited network to the session management function, SMF, in the home network, especially including session termination reason "no-transmission zone" and/or including no-transmission zone information;
-- a call termination towards a multimedia system, especially an IP Multimedia Subsystem, IMS,, in the home network generated by the user equipment due to no-transmission zone enforcement and forwarded by the visited network including reason "no-transmission zone" and/or including no-transmission zone information;
**--** a charging record including reason "no-transmission zone" and/or including no-transmission zone information.

7. Method according to one of the preceding claims, wherein the second step involves the home network (200) forwarding of no-transmission zone information from the home network (200) to an application function (AF) connected to the home network (200).

8. User equipment (20) for being used while roaming in a visited network (100) and in a geographical area comprising at least one no-transmission zone (190), wherein the user equipment (20) is associated with a home network (200), wherein the visited network (100) comprises or is associated or assigned to an uncrewed aerial system service supplier (USS), wherein,
-- upon the user equipment (20) entering or being about to enter a considered no-transmission zone (190), the user equipment (20) is triggered to modify its mode of operation to a no-transmission zone-triggered mode in accordance with being located within the considered no-transmission zone (190), and
-- upon the user equipment (20) leaving or being about to leave the considered no-transmission zone (190), the user equipment (20) is triggered to modify its mode of operation to a no-transmission zone-released mode in accordance with being located outside the considered no-transmission zone (190),
wherein, in order to use the user equipment (20) while roaming in the visited network (100) and in view of the considered no-transmission zone (190), the user equipment (20) is configured such that:
-- the visited network (100) transmits a no-transmission zone trigger indication, to the home network (200), upon being triggered to modify its mode of operation to the no-transmission zone-triggered mode and/or the visited network (100) transmits a no-transmission zone release indication, to the home network (200), upon being triggered to modify its mode of operation to the no-transmission zone-released mode,
**--** the home network (200) adapts a no-transmission zone status, related to the user equipment (20), in response to the no-transmission zone trigger indication and/or the no-transmission zone release indication.

9. System or mobile communication network (100) for using a user equipment (20) roaming in the mobile communication network as a visited network (100) and in a geographical area comprising at least one no-transmission zone (190), wherein the user equipment (20) is associated with a home network (200), wherein the visited network (100) comprises or is associated or assigned to an uncrewed aerial system service supplier (USS), wherein,
-- upon the user equipment (20) entering or being about to enter a considered no-transmission zone (190), the user equipment (20) is triggered to modify its mode of operation to a no-transmission zone-triggered mode in accordance with being located within the considered no-transmission zone (190), and
-- upon the user equipment (20) leaving or being about to leave the considered no-transmission zone (190), the user equipment (20) is triggered to modify its mode of operation to a no-transmission zone-released mode in accordance with being located outside the considered no-transmission zone (190),
wherein, in order to use the user equipment (20) while roaming in the visited network (100) and in view of the considered no-transmission zone (190), the system or mobile communication network (100) is configured such that:
-- the visited network (100) transmits a no-transmission zone trigger indication, to the home network (200), upon being triggered to modify its mode of operation to the no-transmission zone-triggered mode and/or the visited network (100) transmits a no-transmission zone release indication, to the home network (200), upon being triggered to modify its mode of operation to the no-transmission zone-released mode,
**--** the home network (200) adapts a no-transmission zone status, related to the user equipment (20), in response to the no-transmission zone trigger indication and/or the no-transmission zone release indication.

10. Program comprising a computer readable program code which, when executed on a user equipment (20) and/or on a network node of a visited network (100) and/or on a network node of a home network (200) and/or on an uncrewed aerial system service supplier, USS, causes the user equipment (20) and/or the network node of the visited network (100) and/or the network node of the home network (200) and/or the uncrewed aerial system service supplier, USS, to perform the respective method steps according one of claims 1 to 7 in the respective entity.

11. Computer-readable medium comprising instructions which when executed on a user equipment (20) and/or on a network node of a visited network (100) and/or on a network node of a home network (200) and/or on an uncrewed aerial system service supplier, USS, causes the user equipment (20) and/or the network node of the visited network (100) and/or the network node of the home network (200) and/or the uncrewed aerial system service supplier, uncrewed aerial system service supplier, to perform the respective method steps according to one of claims 1 to 7 in the respective entity.
